# EUROPÄISCHE PATENTSCHRIFT

(11) **EP 3 810 873 B1**
(45) Veröffentlichungstag und Bekanntmachung des Hinweises auf die Patenterteilung: **29.05.2024**
(21) Anmeldenummer: 19732586.3
(22) Anmeldetag: 18.06.2019
(51) Int. Cl.: E05B 81/76, E05B 81/20, B60Q 1/26, E05B 83/24

(54) **ENTRIEGELUNGSVORRICHTUNG ZUM ENTRIEGELN EINES SCHLOSSES EINES BEWEGLICHEN FAHRZEUGELEMENTS UND FAHRZEUG**
UNLOCKING DEVICE FOR UNLOCKING A LOCK OF A MOVABLE VEHICLE ELEMENT AND VEHICLE
DISPOSITIF DE DÉVERROUILLAGE D'UNE SERRURE D'UN ÉLÉMENT MOBILE DE VÉHICULE ET VÉHICULE

(30) Priorität: 19.06.2018 DE 102018209867
(43) Veröffentlichungstag der Anmeldung: 28.04.2021
(73) Patentinhaber: Witte Automotive GmbH, 42551 Velbert (DE)
(72) Erfinder: MÄRZ, Tomas, 362 22 Nejdek (CZ); DUCKA, Radek, 431 11 Jirkov (CZ)
(74) Vertreter: Liedtke & Partner Patentanwälte
(86) Internationale Anmeldenummer: PCT/EP2019/066011
(87) Internationale Veröffentlichungsnummer: WO 2019/243330

(56) Entgegenhaltungen:
- DE-A1-102007 050 094
- DE-A1-102016 011 749
- DE-A1-102016 103 425
- US-A1- 2018 029 528
- US-B1- 6 349 984
- US-B2- 9 777 516

## Beschreibung

Die Erfindung betrifft eine Entriegelungsvorrichtung zum Entriegeln eines Schlosses eines beweglichen Fahrzeugelements, insbesondere einer Fahrzeugtür, einer Fahrzeugfronthaube und/oder Fahrzeugheckklappe. Weiterhin betrifft die Erfindung ein Fahrzeug mit einer solchen Entriegelungsvorrichtung.

Ein Schloss der eingangs genannten Art wird beispielsweise in Kraftfahrzeugen zur Verriegelung von Rückenlehnen, Türen, Heckklappen, Kofferraumdeckeln oder dergleichen verwendet. Zum Entriegeln des Schlosses wird beispielsweise manuell ein aus einer Sperrklinke, einer Drehfalle und einem Schließelement gebildetes Gesperre in Bewegung versetzt, um die Sperrklinke von einer Sperrstellung in eine Entriegelungsstellung zu verstellen.

Beispielsweise sind Entriegelungsvorrichtungen beziehungsweise Kraftfahrzeugschließsysteme für Fahrzeugklappen aus der US 2018/029528 A1 und der DE 10 2016 103 425 A1 bekannt.

Der Erfindung liegt die Aufgabe zu Grunde, eine gegenüber dem Stand der Technik verbesserte Entriegelungsvorrichtung zum Entriegeln eines Schlosses eines beweglichen Fahrzeugelements, insbesondere einer Fahrzeugtür, Fahrzeugfronthaube und/oder Fahrzeugheckklappe, anzugeben, insbesondere einen Nutzer beim Auffinden des Betätigungsbereiches zum Öffnen des beweglichen Fahrzeugelements zu unterstützen. Weiterhin liegt der Erfindung die Aufgabe zu Grunde, ein verbessertes Fahrzeug anzugeben.

Die Aufgabe wird erfindungsgemäß gelöst durch eine Entriegelungsvorrichtung mit den Merkmalen des Anspruchs 1. Hinsichtlich des Fahrzeugs wird die Aufgabe erfindungsgemäß mit den Merkmalen des Anspruchs 5 gelöst.

Vorteilhafte Ausgestaltungen der Erfindung sind Gegenstand der abhängigen Patentansprüche.

Eine Entriegelungsvorrichtung zum Entriegeln und/oder Öffnen eines Schlosses eines beweglichen Fahrzeugelements, insbesondere einer Fahrzeugtür, einer Fahrzeugfronthaube und/oder Fahrzeugheckklappe, umfasst zumindest einen Sperrmechanismus zum Verriegeln des Schlosses, wobei der Sperrmechanismus das Schloss in zumindest einer Primärverriegelungsstellung oder einer Vorraststellung hält, eine Erfassungseinheit, welche einen Erfassungsbereich aufweist, um mindestens ein sich dem Erfassungsbereich annäherndes oder sich im Erfassungsbereich befindendes oder bewegendes Objekt zu erfassen, und eine Leuchteinheit mit einem Ausleuchtbereich zur Ausleuchtung des Erfassungsbereichs der Erfassungseinheit, wobei die Leuchteinheit zumindest dann aktiviert wird oder ist, wenn der Sperrmechanismus in die Vorraststellung gestellt wird oder ist. Die Entriegelungsvorrichtung umfasst weiter ein Aktuator, der mit dem Sperrmechanismus des Schlosses zum vollständigen Entriegeln des Schlosses signaltechnisch gekoppelt und/oder bewegungsgekoppelt ist, wobei die Erfassungseinheit mit dem Aktuator signaltechnisch gekoppelt ist, wobei bei Erfassung eines Objekts im Erfassungsbereich der Aktuator den Sperrmechanismus automatisch vollständig entriegelt und das Schloss öffnet.

Die mit der Erfindung erzielten Vorteile liegen insbesondere darin, dass eine automatische Entriegelung des Sperrmechanismus für den Nutzer ermöglicht ist. Beispielsweise ist das Objekt eine Hand des Nutzers oder der Nutzer selbst. Insbesondere ist eine schlüssellose Betätigung der Entriegelungsvorrichtung und ein Öffnen des beweglichen Fahrzeugelements ermöglicht. Die Erfassungseinheit erfasst beispielsweise eine Annäherung der Hand des Nutzers an den ausgeleuchteten Erfassungsbereich oder ein Bewegen der Hand in den ausgeleuchteten Erfassungsbereich hinein und steuert den Aktuator bei erfasster Hand, wobei der Aktuator automatisch den Sperrmechanismus vollständig entriegelt, so dass der Nutzer anschließend das bewegliche Fahrzeugelement vollständig öffnen, beispielsweise anheben oder schwenken, kann. Dies kann manuell durch den Nutzer erfolgen. Alternativ kann die Erfassungseinheit mit einem Verstellaktuator, insbesondere einem Stellmotor oder einer Federeinheit gekoppelt sein, wobei die Erfassungseinheit zunächst den Aktuator ansteuert, so dass dieser den Sperrmechanismus vollständig entriegelt und anschließend den Stellaktuator ansteuert, sodass das bewegliche Fahrzeugelement automatisch vollständig öffnet. Hierdurch ist beispielsweise ein Zeit- und Arbeitsaufwand verringert, wenn ein Suchen eines Schlüssels zum Entriegeln des Schlosses vermieden ist. Insbesondere ist ein intuitives Öffnen des beweglichen Fahrzeugelements ermöglicht. Des Weiteren ist ein Bauraum für die Entriegelungsvorrichtung im Wesentlichen verringert, beispielsweise durch Entfall eines Entriegelungsschlosses, umfassend eine Drehfalle und Sperrklinke, im Griffbereich des beweglichen Fahrzeugelements.

Bei Erfassung eines sich dem Erfassungsbereich annähernden oder in dem Erfassungsbereich befindenden oder bewegenden Objekts, wie der Hand eines Nutzers, wird erfindungsgemäß der Sperrmechanismus automatisch vollständig entriegelt. Damit wird das Schloss geöffnet. Mit anderen Worten:
Durch Ausleuchtung des Erfassungsbereichs zwischen dem, infolge der Vorraststellung des Sperrmechanismus teilweise geöffneten beweglichen Fahrzeugelement und dem festen Fahrzeugelement erkennt der Nutzer in einfacher Art und Weise jenen Bereich, in welchen er seine Hand einführen kann, um den Sperrmechanismus durch seine in diesen Erfassungsbereich eingeführte und erfasste Hand automatisch vollständig entriegeln zu können. Anschließend kann der Nutzer nach automatischer vollständiger Entriegelung des beweglichen Fahrzeugelements das bewegliche Fahrzeugelement manuell öffnen, insbesondere anheben oder schwenken.

Zusätzlich kann die Leuchteinheit bei Erfassung eines sich annähernden Objekts, insbesondere einer zugangsberechtigten Person, an das bewegliche Fahrzeugelement aktiviert werden. Beispielsweise trägt der Nutzer einen Transponder zur Übermittlung einer Zugangsberechtigung an das Fahrzeug bei sich. Bei Erfassung der Zugangsberechtigung beleuchtet die Leuchteinheit beispielsweise einen bestimmten Weg zum beweglichen Fahrzeugelement hin. Hierfür können bzw. kann die Erfassungseinheit und/oder eine weitere Erfassungseinheit einen in eine Umgebung des beweglichen oder festen Fahrzeugelements gerichteten Erfassungsbereich umfassen. Wenn anschließend das Objekt innerhalb des ausgeleuchteten Erfassungsbereichs der Erfassungseinheit erfasst wird, wird der Sperrmechanismus betätigt.

Insbesondere ist die Leuchteinheit zur Ausleuchtung einer Position der Erfassungseinheit vorgesehen. Dadurch ist angezeigt, wo das Objekt zum insbesondere vollständigen Entriegeln des Schlosses positioniert, beispielsweise eingeführt oder bewegt, werden muss.

Gemäß einer weiteren Ausführungsform ist der Sperrmechanismus, insbesondere das Schloss, in zumindest drei Stellungen bringbar. Beispielsweise ist der Sperrmechanismus in zumindest eine Primärverriegelungsstellung, eine Vorraststellung und eine Entriegelungsstellung bringbar. In der Primärverriegelungsstellung befindet sich ein Verriegelungselement, beispielsweise in Form eines Rast- und/oder Hakenelements, insbesondere einer Sperrklinke und/oder eines Sicherheitshakens, des Sperrmechanismus in einer primären Raststellung, in welcher zumindest ein Schließbügelelement fest, d. h. im Wesentlichen unbeweglich mittels des Verriegelungselements fixiert ist. Beispielsweise ist das Schließbügelelement im Bereich des beweglichen Fahrzeugelements angeordnet und der Sperrmechanismus mit Verriegelungselement ist am fixierten Fahrzeugelement angeordnet oder umgekehrt. In dieser Primärverriegelungsstellung ist das bewegliche Fahrzeugelement am festen oder fixierten Fahrzeugelement befestigt und beispielsweise in einer geschlossenen Position gehalten.

Das Verriegelungselement ist von der Primärverriegelungsstellung in die Vorraststellung, insbesondere Sekundärverriegelungsstellung, überführbar bzw. umschaltbar. In dieser Vorraststellung befinden sich das Verriegelungselement und das Schließbügelelement in einer entriegelten und teilweise gelösten, insbesondere noch gesicherten, Stellung. Beispielsweise ist das bewegliche Fahrzeugelement in der Vorraststellung des Sperrmechanismus relativ zum festen oder fixierten Fahrzeugelement teilweise angehoben und somit in eine Zwischenposition, insbesondere eine Ausleucht-, Freigabe- oder Zugriffsposition, gestellt. Hierfür umfasst der Sperrmechanismus beispielsweise ein elastisches Federelement zum mechanischen Anheben des beweglichen Fahrzeugelements relativ zum festen Fahrzeugelement. Das elastische Element hebt das bewegliche Fahrzeugelement bei der teilweisen Lösung des Verriegelungselements leicht an.

Zur Überführung des Verriegelungselements aus der Primärverriegelungsstellung in die Sekundärverriegelungsstellung ist der Sperrmechanismus beispielsweise mit einem im Fahrzeug und/oder am beweglichen Fahrzeugelement angeordneten Betätigungselement gekoppelt.

Eine Weiterbildung sieht vor, dass das Betätigungselement mit dem Sperrmechanismus signaltechnisch gekoppelt und/oder bewegungsgekoppelt ist, um den Sperrmechanismus und damit das Schloss in die Vorraststellung zu stellen und somit teilweise zu entriegeln. Hierzu ist das Betätigungselement beispielsweise mit einem Bowdenzug gekoppelt, welcher wiederum mit dem Sperrmechanismus, insbesondere dem Verriegelungselement, gekoppelt ist.

Bei Betätigung des Betätigungselements, beispielsweise in Form eines Hebels und/oder eines Tasters im Fahrzeuginnenraum und/oder am beweglichen Fahrzeugelement, wird der Sperrmechanismus, insbesondere dessen Verriegelungselement, aus der Primärverriegelungsstellung gelöst und entriegelt. Dadurch wird das bewegliche Fahrzeugelement, insbesondere die Motorhaube, in eine leicht geöffnete Position überführt, insbesondere federgestützt, insbesondere mittels des Federelements, angehoben. Bei Überführung des Verriegelungselements aus der Primärverriegelungsstellung in die Vorraststellung ist oder wird die Leuchteinheit aktivierbar bzw. aktiviert. Die Leuchteinheit ist dabei zur Beleuchtung einer Handeingriffs- bzw. Handeinführungsposition zur vollständigen Entriegelung des Sperrmechanismus vorgesehen. Aufgrund des leicht angehobenen beweglichen Fahrzeugelements ist eine gezielte Handeinführung vereinfacht.

Mit anderen Worten: Bei Betätigung des Sperrmechanismus zur Überführung des Verriegelungselements von der Primärverriegelungsstellung in die Vorraststellung ist oder wird die Leuchteinheit zur Ausleuchtung des Erfassungsbereichs der Erfassungseinheit aktivierbar bzw. aktiviert. Anschließend ist eine vollständige Entriegelung des Sperrmechanismus durch Handeinführung unterhalb des leicht geöffneten, beweglichen Fahrzeugelements, insbesondere der Motorhaube, und innerhalb des Erfassungsbereichs möglich. Wenn die Hand innerhalb des ausgeleuchteten Erfassungsbereichs der Erfassungseinheit erfasst wird, wird der Sperrmechanismus automatisch entriegelt. In der Entriegelungsstellung des Sperrmechanismus ist das bewegliche Fahrzeugelement, insbesondere die Motorhaube, dann vollständig, insbesondere manuell oder automatisch, anhebbar.

In einer Weiterbildung umfasst die Erfassungseinheit zumindest einen elektronischen Sensor und/oder Aktuator, insbesondere kapazitiven Sensor. Zum Beispiel ist mittels des kapazitiven Sensors eine berührungslose Erfassung des sich annähernden und/oder sich in dem Erfassungsbereich befindenden oder bewegenden Objekts ermöglicht. Wenn sich eine Hand des Nutzers im Erfassungsbereich befindet, ist oder wird der Aktuator aktiviert und entriegelt den Sperrmechanismus.

Alternativ oder zusätzlich umfasst die Erfassungseinheit einen elektronischen Aktuator, beispielsweise einen Berührungssensor, Kontaktsensor und/oder Berührungsschalter.

Erfindungsgemäß ist der Aktuator mit dem Sperrmechanismus des Schlosses zum vollständigen Entriegeln des Schlosses signaltechnisch gekoppelt und/oder bewegungsgekoppelt. Ist das Schloss beispielsweise als ein elektronisches Schloss ausgebildet, so überträgt der Aktuator ein Steuerungssignal zum automatischen vollständigen Entriegeln des Schlosses. Ist das Schloss beispielsweise als ein mechanisches Schloss ausgebildet, so ist der Aktuator, zum Beispiel ein Stellmotor, mit einem Bowdenzug gekoppelt, welcher das Schloss, insbesondere das Verriegelungselement, entsprechend betätigt, insbesondere mittels Zugkraft entriegelt und damit öffnet.

Erfindungsgemäß ist die Erfassungseinheit mit dem Aktuator signaltechnisch gekoppelt, wobei bei Erfassung eines Objekts, wie einer Hand, im Erfassungsbereich der Aktuator den Sperrmechanismus automatisch vollständig entriegelt und öffnet. Insbesondere sendet die Erfassungseinheit bei einem im Erfassungsbereich identifizierten Objekt automatisch ein Steuersignal an den Aktuator aus, welcher daraufhin das Verriegelungselement mechanisch mittels eines Bowdenzuges betätigt.

Ein weitere Aspekt sieht vor, dass die Erfassungseinheit und die Leuchteinheit mit dem Aktuator derart signaltechnisch gekoppelt sind, dass, wenn der Aktuator den Sperrmechanismus in die Entriegelungsstellung stellt oder gestellt hat, zumindest die Leuchteinheit deaktiviert wird.

Gemäß einer weiteren Ausgestaltung ist die Erfassungseinheit in einem Einführungs-, Greif- oder Griffbereich des beweglichen Fahrzeugelements angeordnet. Der Nutzer wird intuitiv mittels der Ausleuchtung des Erfassungsbereichs zum Einführungs-, Greif- oder Griffbereich geführt. Insbesondere kann das bewegliche Fahrzeugelement nach beispielsweise einer berührungslosen Entriegelung direkt vom Nutzer am Griffbereich geöffnet, beispielsweise angehoben oder geschwenkt, werden.

In einer weiteren möglichen Ausgestaltung ist die Erfassungseinheit zur Erfassung einer Berührung des Griffbereichs durch das Objekt und/oder einer Berührung einer Kontaktfläche der Erfassungseinheit durch das Objekt ausgebildet. Beispielsweise ist an einer Unterseite des beweglichen Fahrzeugelements, d. h. beispielsweise an einer von einem Nutzer abgewandten Seite, ein Kontaktelement zur Erfassung der Berührung angeordnet. Bei Berührung wird der Aktuator aktiviert und entriegelt den Sperrmechanismus. Der Nutzer muss seine Hand nicht ablegen, wie beispielsweise beim Öffnen mit einem herkömmlichen Schlüssel, und kann nach Entriegelung direkt das Fahrzeugelement öffnen. Eine fließende Bewegung zum Entriegeln des Schlosses und zum Öffnen, d. h. beispielsweise Hochdrücken oder Aufziehen des beweglichen Fahrzeugelements, ist ermöglicht. Alternativ ist die Erfassungseinheit im Bereich eines fixierten Fahrzeugelements, beispielsweise an einem unteren Karosserieteil des Fahrzeugs, angeordnet. Dabei ist der Erfassungsbereich nach oben gerichtet. Weiterhin kann der Nutzer mit der Hand und/oder den Fingern die Kontaktfläche der Erfassungseinheit berühren, wodurch der Sperrmechanismus entriegelbar ist. Die Erfassungseinheit ist beispielsweise an einem Trägerelement, insbesondere einem Querträgerelement, angeordnet. Das Trägerelement weist beispielsweise eine Breite auf, die mit einer Breite des fixierten Fahrzeugelements korrespondiert. Dadurch ist die Erfassungseinheit in einfacher und robuster Weise fixierbar.

Der Erfassungsbereich der Erfassungseinheit ist dabei nach oben gerichtet. Beispielsweise umfasst die Erfassungseinheit eine Kontaktfläche zur Erfassung einer Berührung durch das Objekt. Eine Form und Größe des Erfassungsbereichs und/oder der Kontaktfläche ist weitestgehend an Objektformen angepasst. Beispielsweise weist die Erfassungseinheit einen kissenähnlichen oder annähernd, mindestens handgroßen, rechteckigen oder ovalen Erfassungsbereich und/oder Kontaktfläche auf.

Gemäß einer möglichen Ausführungsform umfasst die Leuchteinheit zumindest eine Leuchtdiode. Dadurch benötigt die Leuchteinheit einen kleinen Bauraum. Insbesondere ist eine Nutzungsdauer der Leuchteinheit mittels Verwendung einer Leuchtdiode erhöht. Des Weiteren ist eine Überhitzung des Ausleuchtbereichs vermieden.

Eine weitere Ausführungsform sieht vor, dass der Aktuator über zumindest einen Bowdenzug mit dem Sperrmechanismus gekoppelt ist. Insbesondere ist diese Kopplung an unterschiedliche Bauräume anpassbar. Dabei ist eine Verlegung des Bowdenzugs weitestgehend einfach. Zudem ist eine schnelle, mechanische Betätigung des Sperrmechanismus bei Aktivierung des Aktuators ermöglicht. Beispielsweise umfasst der Aktuator eine Stelleinheit, die den Bowdenzug betätigt. Der Bowdenzug ist beispielsweise mit einem Sicherheitshaken und/oder einer Sperrklinke des Sperrmechanismus gekoppelt und löst diese aus einer Sperrstellung bei einer Betätigung des Bowdenzuges.

Erfindungsgemäß sind der Aktuator und die Erfassungseinheit zumindest signaltechnisch miteinander gekoppelt. Zum Beispiel umfasst die Entriegelungsvorrichtung eine drahtlose und/oder drahtgebundene Kommunikation zwischen den einzelnen Bestandteilen. Beispielsweise ist der Aktuator mittels eines Kabels mit der Erfassungseinheit signaltechnisch gekoppelt. Alternativ ist der Aktuator mittels einer Funkverbindung mit der Erfassungseinheit gekoppelt. Bei Erfassung eines Objekts von der Erfassungseinheit, wird ein Signal, insbesondere Steuersignal, an den Aktuator übermittelt. Anschließend wird der Aktuator aktiviert und der Bowdenzug betätigt.

Des Weiteren beschreibt die Erfindung ein Fahrzeug mit zumindest einem beweglichen Fahrzeugelement, welches an einem festen oder fixierten Fahrzeugelement zwischen einer geschlossenen Position, einer Zwischenposition und einer geöffneten Position beweglich angeordnet oder gelagert ist, und mit einer Entriegelungsvorrichtung gemäß Anspruch 5.

In der geschlossenen Position des beweglichen Fahrzeugelements steht der Sperrmechanismus in der Primärverriegelungsstellung. In der Zwischenposition (auch Ausleucht-, Freigabe-, Entriegelungs- oder Greifposition genannt) des beweglichen Fahrzeugelements steht der Sperrmechanismus in der Vorraststellung. In der geöffneten Position (auch Offenposition genannt) des beweglichen Fahrzeugelements steht der Sperrmechanismus in der Entriegelungsstellung.

Zusätzlich kann das Fahrzeug zumindest eine Betätigungseinheit, die mit dem Sperrmechanismus zum teilweisen Entriegeln des Schlosses gekoppelt ist, aufweisen. Erfindungsgemäß weist das Fahrzeug einen Aktuator, der mit dem Sperrmechanismus zum vollständigen Entriegeln und Öffnen des Schlosses gekoppelt ist, wobei die Erfassungseinheit und/oder die Leuchteinheit mit dem Aktuator derart zumindest signaltechnisch gekoppelt sind/ist, dass, wenn der Aktuator den Sperrmechanismus in eine Vorraststellung stellt oder gestellt hat, die Erfassungseinheit und/oder die Leuchteinheit aktiviert werden/wird bzw. sind/ist.

Darüber hinaus kann die Leuchteinheit eingerichtet sein, den Erfassungsbereich auszuleuchten, wenn der Sperrmechanismus in seine Vorraststellung gestellt ist und das bewegliche Fahrzeugelement in die Zwischenposition, insbesondere in die Ausleucht- oder Freigabe- oder Greifposition, gestellt ist. Dabei ist der Erfassungsbereich zwischen dem festen oder fixierten Fahrzeugelement und dem beweglichen und teilweise geöffneten Fahrzeugelement ausgebildet. Dabei überlappen sich der Erfassungs- und Ausleuchtbereich. Im Wesentlichen stimmen der Erfassungs- und der Ausleuchtbereich in Form, Größe und Abmessungen überein.

Bei Ausleuchtung des Erfassungsbereichs und Erfassung eines sich in dem ausgeleuchteten Erfassungsbereich befindenden oder bewegenden Objekts entriegelt der Aktuator dann den Sperrmechanismus automatisch und vollständig, so dass der Sperrmechanismus geöffnet wird und somit das Schloss geöffnet wird.

Ausführungsbeispiele der Erfindung werden im Folgenden anhand von Zeichnungen näher erläutert.

Darin zeigen:
- Figur 1: schematisch eine perspektivische Darstellung eines Ausführungsbeispiels einer Entriegelungsvorrichtung zum Entriegeln eines Schlosses eines beweglichen Fahrzeugelements, insbesondere einer Fahrzeugfronthaube,
- Figur 2: schematisch eine von einem Objekt ausgeführte Betätigung der Entriegelungsvorrichtung,
- Figuren 3A bis 3C: schematisch einen Öffnungsablauf des beweglichen Fahrzeugelements, und
- Figuren 4A bis 4C: schematisch Ausführungsbeispiele eines Sperrmechanismus des Schlosses in verschiedenen Positionen während des Öffnungsablaufs des beweglichen Fahrzeugelements.

Einander entsprechende Teile sind in allen Figuren mit den gleichen Bezugszeichen versehen.

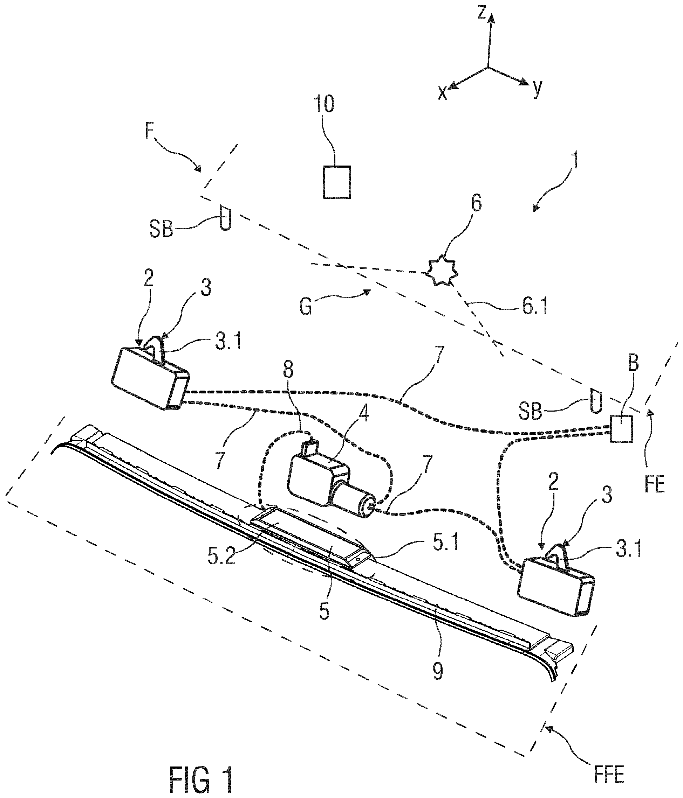

**Figur 1** zeigt schematisch ein bewegliches Fahrzeugelement FE eines Fahrzeugs F. Im dargestellten Ausführungsbeispiel ist das bewegliche Fahrzeugelement FE insbesondere eine Fahrzeugfronthaube.

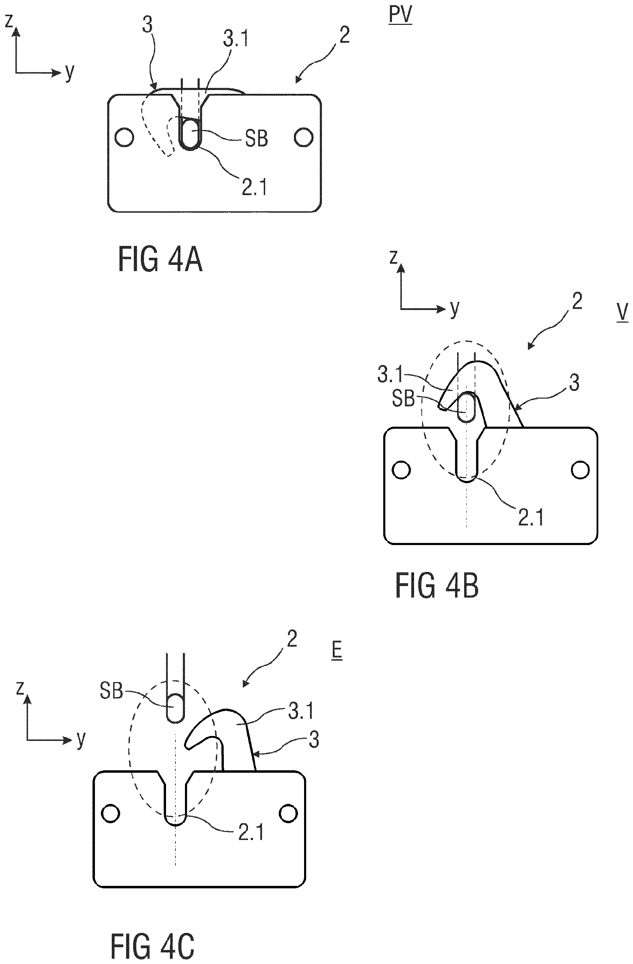

Das Fahrzeugelement FE umfasst eine Entriegelungsvorrichtung 1 zum Entriegeln zumindest eines Schlosses 2. Das Schloss 2 ist beispielsweise ein herkömmliches Gesperre, umfassend zumindest ein Sperrmechanismus 3 mit beispielsweise einem Verriegelungselement 3.1, beispielsweise einem Rast-und/oder Hakenelement, insbesondere eine Sperrklinke und/oder einen Sicherheitshaken. Der Sperrmechanismus 3 ist beispielsweise in drei Stellungen bringbar, eine in Figur 4A gezeigte Primärverriegelungsstellung PV, eine in Figur 4B gezeigte Vorraststellung V und eine in Figur 4C gezeigte Entriegelungsstellung E. In der Primärverriegelungsstellung PV und der Vorraststellung V ist zum Beispiel ein am beweglichen Fahrzeugelement FE angeordnetes Schließbügelelement SB durch das Verriegelungselement 3.1 relativ im oder am Schloss 2 arretierbar oder arretiert und somit ist das Schloss 2 verriegelt.

Im Ausführungsbeispiel umfasst die Entriegelungsvorrichtung 1 zwei identische Schlösser 2. Die Anzahl der Schlösser 2 hängt insbesondere von der Größe des zu verriegelnden beweglichen Fahrzeugelements FE ab. Bei einem kleinen beweglichen Fahrzeugelement FE kann auch nur ein Schloss 2 vorgesehen sein. Bei einem größeren beweglichen Fahrzeugelement FE können mehrere Schlösser 2 vorgesehen sein.

Des Weiteren umfasst die Entriegelungsvorrichtung 1 eine Erfassungseinheit 5, welche einen Erfassungsbereich 5.1 aufweist, um mindestens ein sich dem Erfassungsbereich 5.1 annäherndes oder sich im Erfassungsbereich 5.1 befindendes oder bewegendes Objekt O zu erfassen, und eine Leuchteinheit 6 mit einem Ausleuchtbereich 6.1 zur Ausleuchtung des Erfassungsbereichs 5.1 der Erfassungseinheit 5, wobei die Leuchteinheit 6 und/oder die Erfassungseinheit 5 zumindest dann aktiviert werden/wird oder sind/ist, wenn der Sperrmechanismus 3 in die Vorraststellung V gestellt wird oder ist.

Die Entriegelungsvorrichtung 1 umfasst des Weiteren einen Aktuator 4, der mit dem Sperrmechanismus 3 des Schlosses 2 gekoppelt ist. Der Aktuator 4 ist beispielsweise ein herkömmlicher Aktuator 4, welcher in Entriegelungs- und Verriegelungssystemen von Fahrzeugtüren, Tankdeckeln, Heckklappen oder Fahrzeugfrontklappen Verwendung findet. Dabei ist der Aktuator 4 beispielsweise im Bereich des beweglichen Fahrzeugelements FE oder in einem anderen Bereich des Fahrzeugs F angeordnet. Der Aktuator 4 umfasst beispielsweise eine nicht näher dargestellte Stelleinheit, wie einen Stellmotor, oder Stellfunktion, mittels welcher der Aktuator 4 den Sperrmechanismus 3 betätigen, insbesondere entriegeln, kann. Bei Entriegelung des Sperrmechanismus 3 wird das Schließbügelelement SB freigelegt, wodurch das bewegliche Fahrzeugelement FE zur Öffnung freigegeben wird.

Die Erfassungseinheit 5 ist mit dem Aktuator 4 gekoppelt. Insbesondere ist die Erfassungseinheit 5 signaltechnisch, zum Beispiel mittels einer Signalübertragungsleitung, insbesondere einer Datenbusverbindung, wie einem CAN-Bus, oder eines anderen geeigneten Signalübertragungskabels 5, mit dem Aktuator 4 gekoppelt.

Beispielsweise umfasst die Leuchteinheit 6 eine Anzahl von Leuchtdioden (LED).

Bei Erfassung eines sich in dem ausgeleuchteten Erfassungsbereich 5.1 befindenden oder bewegenden Objekts O entriegelt der Aktuator 4 den Sperrmechanismus 3 automatisch. Insbesondere ist der Aktuator 4 derart mit dem Sperrmechanismus 3 gekoppelt, dass bei Aktivierung des Aktuators 4 der Sperrmechanismus 3 in eine, in Figur 4C gezeigte Entriegelungsstellung E stellbar ist.

Zum Beispiel umfasst die Erfassungseinheit 5 eine Anzahl von kapazitiven Sensoren. Alternativ oder zusätzlich umfasst die Erfassungseinheit 5 eine Anzahl von elektronischen Aktuatoren. Insbesondere umfasst die Erfassungseinheit 5 Annäherungs- und/oder Berührungssensoren zur Berührungserkennung, um beispielsweise an einem Griff G, wie Fronthaubengriff bzw. Motorhaubengriff, ein sich annäherndes oder bewegendes Objekt O zu erkennen und eine Funktion, wie eine Verriegelungs- oder Entriegelungsfunktion freizugeben oder zu sperren. Beispielsweise ist das Objekt O eine sich annähernde Hand und/oder Finger eines Nutzers oder ein Nutzer des Fahrzeugs F selbst.

Zum Beispiel ist die Leuchteinheit 6 derart ansteuerbar, dass die Leuchteinheit 6 bei einem durch das Fahrzeug F ermittelte Zugangsberechtigung des Nutzers aktivierbar, insbesondere automatisch aktivierbar ist. Hierfür ist die Leuchteinheit 6 mit einer im Fahrzeug F angeordneten Steuereinheit 10 gekoppelt. Mittels des Ausleuchtbereichs 6.1 ist eine Position der Erfassungseinheit 5 für den Nutzer sichtbar. Dadurch kann der Nutzer bzw. das Objekt O intuitiv in den bzw. zum Erfassungsbereich 5.1 greifen. Insbesondere korrespondiert der Ausleuchtbereich 6.1 mit dem Erfassungsbereich 5.1.

Gemäß einer weiteren Ausführungsform ist die Leuchteinheit 6 derart ansteuerbar, dass die Leuchteinheit 6 bei Überführung des Verriegelungselements 3.1 von der Primärverriegelungsstellung PV in die Vorraststellung V aktivierbar ist, insbesondere eingeschaltet wird und leuchtet. Die Leuchteinheit 6 ist zur Ausleuchtung einer Handeingriffs- bzw. Handeinführungsposition zur vollständigen Entriegelung des Sperrmechanismus 3, d. h. Überführung des Sperrmechanismus 3 von der Vorraststellung V in die Entriegelungsstellung E, vorgesehen.

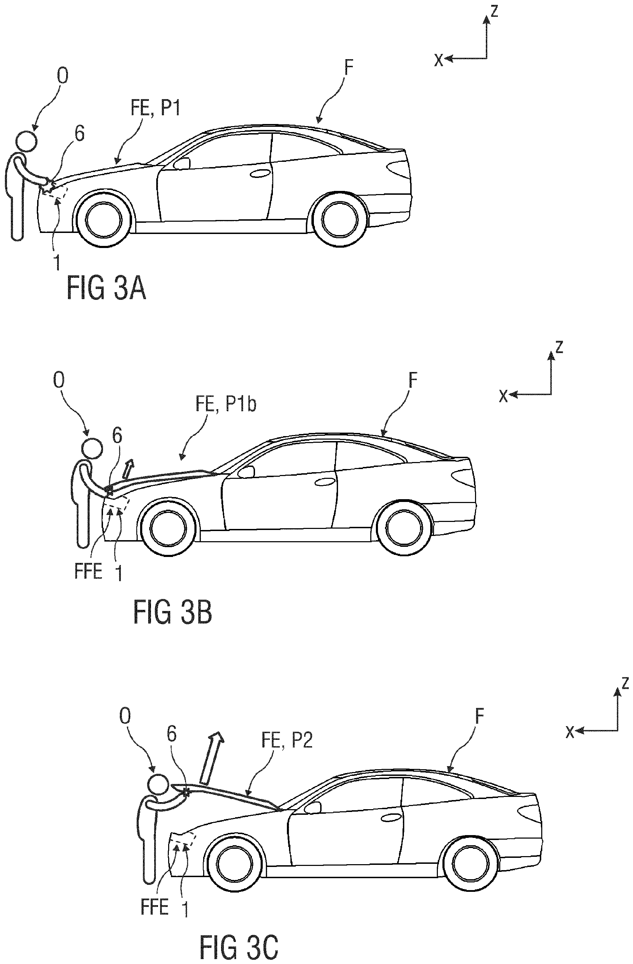

Mit anderen Worten: Bei Betätigung des Sperrmechanismus 3 zur Überführung des Verriegelungselements 3.1 von der Primärverriegelungsstellung PV in die Vorraststellung V ist die Leuchteinheit 6 zur Ausleuchtung des Erfassungsbereichs 5.1 der Erfassungseinheit 5 aktivierbar. Beispielsweise wird der Sperrmechanismus 3 aus der Primärverriegelungsstellung PV, in welcher das bewegliche Fahrzeugelement FE in einer geschlossenen Position P1 (Figuren 3A, 4A) verriegelt und damit gesichert gehalten ist, bei einer manuellen Betätigung eines Betätigungselements B, insbesondere eines Hebels im Fahrzeuginneren, durch einen Nutzer mittels eines beispielsweise daraus resultierend gezogenen Bowdenzugs 7 in die Vorraststellung V (Figuren 3B, 4B) gebracht.

In einer Weiterbildung sind die Entriegelungsvorrichtung 1 und das Schloss 2 bzw. die Schlösser 2 im Bereich eines fixierten Fahrzeugelements FFE angeordnet. Unter fixiertes Fahrzeugelement FFE wird beispielsweise eine Fahrzeugkarosserie und/oder ein unterhalb des beweglichen Fahrzeugelements FE befindlichen Stau- und/oder Bauraums verstanden. Dabei arretiert das zumindest eine Schloss 2 das bewegliche Fahrzeugelement FE an dem fixierten Fahrzeugelement FFE.

Die Erfassungseinheit 5 ist derart angeordnet, dass der Erfassungsbereich 5.1 nach oben gerichtet ist. Beispielsweise wird das Objekt O erkannt, wenn das Objekt O sich oberhalb der Erfassungseinheit 5 befindet.

Zum verbesserten Verständnis der Beschreibung ist ein Koordinatensystem dargestellt, umfassend eine Längsachse x, eine Querachse y und eine Vertikalachse z in Bezug auf das Fahrzeug F.

Insbesondere ist zumindest die Erfassungseinheit 5 in einem vorderen Bereich des fixierten Fahrzeugelements FFE angeordnet, so dass die Erfassungseinheit 5 für das Objekt O leicht zugänglich ist.

Die Leuchteinheit 6 ist beispielsweise im vorderen Bereich des beweglichen Fahrzeugelements FE angeordnet. Dabei ist der Ausleuchtbereich 6.1 zur Ausleuchtung des Erfassungsbereichs 5.1 nach unten gerichtet. D. h., die Position der Erfassungseinheit 5 ist für den Nutzer im Stand, von oben sichtbar. Befindet sich das das Objekt O im Erfassungsbereich 5.1, wird das Objekt O von oben von der Leuchteinheit 6 weiterhin beleuchtet.

Alternativ oder zusätzlich ist die Leuchteinheit 6 im unteren, fixierten Fahrzeugelement FFE angeordnet. Beispielsweise ist die Leuchteinheit 6 im Umfeld der Erfassungseinheit 5 angeordnet. Dabei ist der Ausleuchtbereich 6.1 zur Ausleuchtung des Erfassungsbereichs 5.1 nach oben gerichtet.

Beispielsweise ist das bewegliche Fahrzeugelement FE mittels zwei Schlössern 2 an dem fixierten Fahrzeugelement FFE verriegelbar. Dabei sind die Schlösser 2 in Randbereichen des fixierten Fahrzeugelements FFE angeordnet.

Im dargestellten Ausführungsbeispiel sind die Schlösser 2 herkömmliche Gesperre. Die Schlösser 2 umfassen jeweils einen Sperrmechanismus 3. Beispielsweise umfassen die Gesperre eine Drehfalle mit einem Schließelement und eine Sperrklinke.

Die Schlösser 2 sind zur synchronen Auslösung der Entriegelung miteinander gekoppelt. Zum Beispiel sind die Schlösser 2 mittels des Bowdenzugs 7 oder mittels eines anderen Kraft- und/oder Signalübertragungselements miteinander gekoppelt. Auch können mehrere einzelne Bowdenzüge 7 vorgesehen sein.

Eines der oder beide Schlösser 2 ist bzw. sind mit dem Aktuator 4 gekoppelt, insbesondere bewegungsgekoppelt. Insbesondere ist das Schloss 2 mittels eines Bowdenzugs 7 oder mittels eines anderen Kraft- und/oder Signalübertragungselements mit dem Aktuator 4 gekoppelt. Alternativ kann der Aktuator 4 je Schloss 2 einen zugehörigen Bowdenzug 7 betätigen. Durch Ansteuerung des Aktuators 4 und einer daraus resultierenden Betätigung des oder der Bowdenzüge 7 sind die Schlösser 2 zur insbesondere vollständigen Entriegelung auslösbar. Insbesondere werden die Schlösser 2 mittels Betätigung des Bowdenzugs 7 oder der Bowdenzüge 7 durch den Aktuator 4 von der Vorraststellung V in die Entriegelungsstellung E gestellt und vollständig entriegelt (Figuren 3C, 4C). Damit sind die Schlösser 2 geöffnet.

Der Aktuator 4 ist signaltechnisch mit der Erfassungseinheit 5 gekoppelt. Beispielsweise ist der Aktuator 4 mittels eines Signalübertragungskabels 8 mit der Erfassungseinheit 5 gekoppelt. Ein Erfassungssignal der Erfassungseinheit 5 steuert den Aktuator 4 an, wenn ein Objekt O, wie eine Hand, im Erfassungsbereich 5.1 erfasst wird.

Die Erfassungseinheit 5 ist beispielsweise an einem Trägerelement 9, insbesondere einem Querträgerelement, angeordnet. Das Trägerelement 9 weist beispielsweise eine Breite auf, die mit einer Breite des fixierten Fahrzeugelements FFE, insbesondere eines Unterteils des beweglichen Fahrzeugelements FE, korrespondiert. Dadurch ist die Erfassungseinheit 5 in einfacher und robuster Weise fixierbar.

Der Erfassungsbereich 5.1 der Erfassungseinheit 5 ist nach oben gerichtet. Beispielsweise umfasst die Erfassungseinheit 5 eine Kontaktfläche 5.2 zur Erfassung einer Berührung durch das Objekt O. Eine Form und Größe des Erfassungsbereichs 5.1 und/oder der Kontaktfläche 5.2 ist weitestgehend an Objektformen angepasst. Beispielsweise weist die Erfassungseinheit 5 einen kissenähnlichen oder annähernd, mindestens handgroßen, rechteckigen oder ovalen Erfassungsbereich 5.1 und/oder Kontaktfläche 5.2 auf.

Beispielsweise ist die Leuchteinheit 6 an einer unteren Flächenseite des beweglichen Fahrzeugelements FE angeordnet. D. h., die Leuchteinheit 6 ist derart angeordnet, dass der Ausleuchtbereich 6.1 in Richtung des fixierten Fahrzeugelements FFE gerichtet ist. Beispielsweise ist die Leuchteinheit 6 mittig zur Erfassungseinheit 5 ausgerichtet, um den Erfassungsbereich 5.1 effektiv auszuleuchten. In einer Weiterbildung umfasst die Leuchteinheit 6 mehrere Leuchtdioden, um mit einer Form der Erfassungseinheit 5 zu korrespondieren.

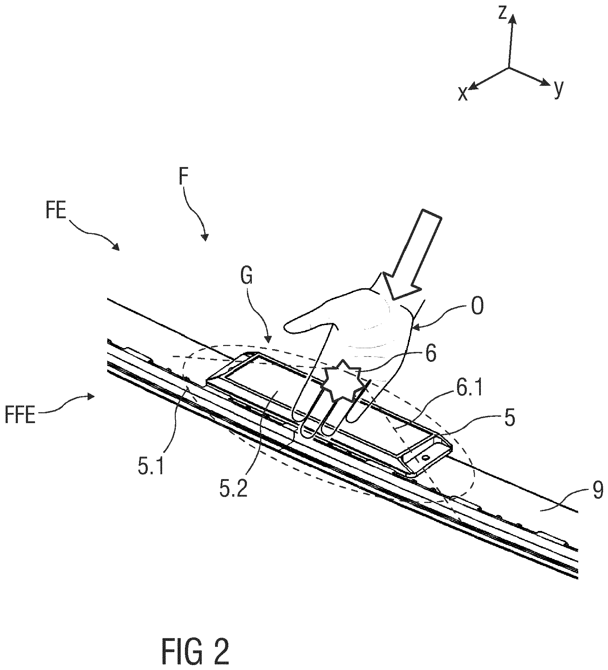

**Figur 2** zeigt schematisch eine von einem Objekt O ausgeführte Betätigung der Entriegelungsvorrichtung 1. Das Objekt O ist im dargestellten Ausführungsbeispiel eine Hand des Nutzers. Die Hand befindet sich zwischen dem fixierten Fahrzeugelement FFE und dem beweglichen Fahrzeugelement FE. Anhand des Ausleuchtbereichs 6.1 bei aktivierter Leuchteinheit 6 weiß der Nutzer, wo der Erfassungsbereich 5.1 und/oder die Kontaktfläche 5.2 angeordnet sind/ist.

**Figuren 3A und 3B** zeigen schematisch einen Öffnungsablauf des beweglichen Fahrzeugelements FE.

Insbesondere zeigt Figur 3A das bewegliche Fahrzeugelement FE in einer verriegelten und geschlossenen Position P1. Figur 3B zeigt das bewegliche Fahrzeugelement FE in einer Zwischenposition P1b, insbesondere einer teilweise entriegelten und bereichsweise geöffneten, aber noch gesicherten Position. Dabei ist das bewegliche Fahrzeugelement FE in dieser Zwischenposition P1b in einem Abstand zu dem fixierten Fahrzeugelement FFE zum Beispiel federgestützt gestellt und somit teilweise geöffnet, aber immer noch durch den Sperrmechanismus 3 gesichert gehalten und kann nicht geöffnet werden. Figur 3C zeigt das bewegliche Fahrzeugelement FE in einer vollständig entriegelten und geöffneten Position P2.

Das Fahrzeug F umfasst in einer ersten Ausführungsform zumindest die zumindest eine Erfassungseinheit 5, welche einen Erfassungsbereich 5.1 aufweist, um mindestens ein sich dem Erfassungsbereich 5.1 annäherndes oder sich im Erfassungsbereich 5.1 befindliches oder bewegendes Objekt O zu erfassen, und die zumindest eine Leuchteinheit 6 mit einem Ausleuchtbereich 6.1, welcher den Erfassungsbereich 5.1 der Erfassungseinheit 5 ausleuchtet, wobei die Leuchteinheit 6 und/oder die Erfassungseinheit 5 zumindest dann aktiviert werden/wird oder sind/ist, wenn das bewegliche Fahrzeugelement FE in die Zwischenposition P1b gestellt wird oder ist.

Durch zumindest Aktivierung der Leuchteinheit 6, dann, wenn das bewegliche Fahrzeugelement FE in die Zwischenposition P1b nach Figur 3A gestellt ist, ist der Erfassungsbereich 6.1 mittels der aktivierten und leuchtenden Leuchteinheit 6 ausleuchtbar. Aufgrund der leicht geöffneten Position des beweglichen Fahrzeugelements FE ist somit der Erfassungsbereich 5.1 einsehbar und durch die Ausleuchtung besser erkennbar als im Stand der Technik.

**Figuren 4A bis 4C** zeigen jeweils schematisch ein vereinfachtes Ausführungsbeispiel eines Schlosses 2 mit einem Sperrmechanismus 3. Insbesondere zeigt Figur 4A das Schloss 2 mit dem Sperrmechanismus 3 in einer Primärverriegelungsstellung PV, Figur 4B zeigt das Schloss 2 mit dem Sperrmechanismus 3 in einer Vorraststellung V und Figur 4C zeigt das Schloss 2 mit dem Sperrmechanismus 3 in einer Entriegelungsstellung E.

In der in Figur 4A gezeigten Primärverriegelungsstellung PV befindet sich das Verriegelungselement 3.1, beispielsweise in Form eines Rast- und/oder Hakenelements, insbesondere einer Sperrklinke und/oder eines Sicherheitshakens, des Sperrmechanismus 3 in einer primären Raststellung, in welcher das Schließbügelelement SB fest, d. h. im Wesentlichen unbeweglich durch das Verriegelungselement 3.1 am Schloss 2 fixiert ist. Beispielsweise umfasst das Schloss 2 eine Aufnahme 2.1, welche zur Aufnahme und Fixierung des Schließbügelelements SB relativ zum Schloss 2 ausgebildet ist. Zum Beispiel ist die Aufnahme 2.1 in Form eines Langlochs und/oder einer Aussparung ausgebildet.

Das Verriegelungselement 3.1 ist von der Primärverriegelungsstellung in die Vorraststellung V, insbesondere Sekundärverriegelungsstellung, überführbar bzw. umschaltbar. In der in Figur 4B gezeigten Vorraststellung V befinden sich das Verriegelungselement 3.1 und das Schließbügelelement SB in einer teilweisen gelösten, entriegelten und gesicherten Stellung. Beispielsweise ist das bewegliche Fahrzeugelement FE in der Vorraststellung V teilweise angehoben.

Hierfür umfasst der Sperrmechanismus 3 beispielsweise ein nicht näher gezeigtes, elastisches Federelement zum mechanischen Anheben des beweglichen Fahrzeugelements FE in Abhängigkeit der Stellung des Verriegelungselements 3.1. Das elastische Element hebt das bewegliche Fahrzeugelement FE bei der teilweisen Entriegelung des Verriegelungselements 3.1 leicht an. Zur Überführung des Verriegelungselements 3.1 aus der Primärverriegelungsstellung PV in die Vorraststellung V ist der Sperrmechanismus 3 beispielsweise mit einem im Fahrzeug F und/oder am beweglichen Fahrzeugelement FE angeordneten Betätigungselement gekoppelt.

Bei Betätigung des Betätigungselements B, beispielsweise in Form eines Hebels und/oder eines Tasters im Fahrzeuginnenraum und/oder am beweglichen Fahrzeugelement FE, wird das Verriegelungselement 3.1 aus der Primärverriegelungsstellung PV gelöst. Dadurch wird das bewegliche Fahrzeugelement FE, insbesondere die Motorhaube, in eine leicht geöffnete Stellung, die Zwischenposition P1b, überführt, insbesondere federgestützt angehoben.

Bei Überführung des Verriegelungselements 3.1 aus der Primärverriegelungsstellung PV in die Vorraststellung V ist die Leuchteinheit 6 aktivierbar oder wird aktiviert. Die Leuchteinheit 6 ist zur Beleuchtung einer Handeingriffs- bzw. Handeinführungsposition zur weiteren, vollständigen Entriegelung des Sperrmechanismus 3, d. h. zur Überführung des Sperrmechanismus 3 von der Vorraststellung V in die Entriegelungsstellung E vorgesehen. Aufgrund des leicht angehobenen beweglichen Fahrzeugelements FE und des beleuchteten Erfassungsbereichs 5.1 ist eine gezielte Handeinführung vereinfacht.

### BEZUGSZEICHENLISTE

- 1: Entriegelungsvorrichtung
- 2: Schloss
- 2.1: Aufnahme
- 3: Sperrmechanismus
- 3.1: Verriegelungselement
- 4: Aktuator
- 5: Erfassungseinheit
- 5.1: Erfassungsbereich
- 5.2: Kontaktfläche
- 6: Leuchteinheit
- 6.1: Ausleuchtbereich
- 7: Bowdenzug
- 8: Signalübertragungskabel
- 9: Trägerelement
- 10: Steuereinheit

- B: Betätigungselement
- E: Entriegelungsstellung
- F: Fahrzeug
- FE: bewegliches Fahrzeugelement
- FFE: fixiertes Fahrzeugelement
- G: Griff
- O: Objekt
- P1, P2: Position
- P1b: Zwischenposition
- PV: Primärverriegelungsstellung
- SB: Schließbügelelement
- V: Vorraststellung

- x: Längsachse
- y: Querachse
- z: Vertikalachse

## Patentansprüche

1. Entriegelungsvorrichtung (1) zum Entriegeln und Öffnen eines Schlosses (2) eines beweglichen Fahrzeugelements (FE), insbesondere einer Fahrzeugtür, einer Fahrzeugfronthaube und/oder Fahrzeugheckklappe, wobei die Entriegelungsvorrichtung (1) zumindest umfasst:
- einen Sperrmechanismus (3) zum Verriegeln des Schlosses (2), wobei der Sperrmechanismus (3) das Schloss (2) in zumindest einer Primärverriegelungsstellung (PV) oder einer teilweise entriegelten Vorraststellung (V) hält,
- eine Erfassungseinheit (5), welche einen Erfassungsbereich (5.1) aufweist, um mindestens ein sich dem Erfassungsbereich (5.1) annäherndes oder sich im Erfassungsbereich (5.1) befindendes oder bewegendes Objekt (O) zu erfassen, und
- eine Leuchteinheit (6) mit einem Ausleuchtbereich (6.1) zur Ausleuchtung des Erfassungsbereichs (5.1) der Erfassungseinheit (5),
wobei die Leuchteinheit (6) und/oder die Erfassungseinheit (5) zumindest dann aktiviert werden/wird oder sind/ist, wenn der Sperrmechanismus (3) von der Primärverriegelungsstellung (PV) in
die Vorraststellung (V) gestellt wird oder ist,
wobei ein Aktuator (4) vorgesehen ist, der mit dem Sperrmechanismus (3) des Schlosses (2) zum vollständigen Entriegeln des Schlosses (2) signaltechnisch gekoppelt und/oder bewegungsgekoppelt ist,
wobei die Erfassungseinheit (5) mit dem Aktuator (4) signaltechnisch gekoppelt ist, wobei bei Erfassung eines Objekts (O) im Erfassungsbereich (5.1) der Aktuator (4) den Sperrmechanismus (3) automatisch vollständig entriegelt und das Schloss (2) öffnet.

2. Entriegelungsvorrichtung (1) nach Anspruch 1, wobei die Erfassungseinheit (5) zumindest einen elektronischen Sensor, insbesondere einen kapazitiven Sensor, umfasst.

3. Entriegelungsvorrichtung (1) nach einem der vorhergehenden Ansprüche, wobei ein Betätigungselement (B) vorgesehen ist, das mit dem Sperrmechanismus (3) zum teilweisen Entriegeln des Schlosses (2) signaltechnisch gekoppelt und/oder bewegungsgekoppelt ist, um das Schloss (2) in die Vorraststellung (V) zu stellen.

4. Entriegelungsvorrichtung (1) nach einem der vorhergehenden Ansprüche, wobei die Erfassungseinheit (5) und die Leuchteinheit (6) mit dem Aktuator (4) derart signaltechnisch gekoppelt sind, dass, wenn der Aktuator (4) den Sperrmechanismus (3) in die Entriegelungsstellung (E) stellt oder gestellt hat, zumindest die Leuchteinheit (6) deaktiviert wird.

5. Fahrzeug (F) mit einem beweglichen Fahrzeugelement (FE), welches an einem festen oder fixierten Fahrzeugelement (FFE) zwischen einer geschlossenen Position (P1), einer teilweise entriegelten und bereichsweise geöffneten Zwischenposition (P1b) und einer geöffneten Position (P2) beweglich gelagert ist, und mit einer Entriegelungsvorrichtung (1) nach einem der vorhergehenden Ansprüche.

6. Fahrzeug (F) nach Anspruch 5, wobei das Fahrzeug (F) zusätzlich zumindest:
- ein Betätigungselement (B), das mit dem Sperrmechanismus (3) zum teilweisen Entriegeln des Schlosses (2) gekoppelt ist umfasst,
wobei die Erfassungseinheit (5) und die Leuchteinheit (6) mit dem Aktuator (4) derart zumindest signaltechnisch gekoppelt sind, dass, wenn der Aktuator (4) den Sperrmechanismus (3) in eine Vorraststellung (V) stellt oder gestellt hat, die Erfassungseinheit (5) und/oder die Leuchteinheit (6) aktiviert werden bzw. sind.

7. Fahrzeug (F) nach Anspruch 6, wobei die Leuchteinheit (6) eingerichtet ist, den Erfassungsbereich (5.1) auszuleuchten, wenn der Sperrmechanismus (3) in eine Vorraststellung (V) gestellt ist und das bewegliche Fahrzeugelement (FE) in die Zwischenposition (P1b) gestellt ist.

8. Fahrzeug (F) nach einem der vorhergehenden Ansprüche 5 bis 7,
wobei der Erfassungsbereich (5.1) zwischen dem festen oder fixierten Fahrzeugelement (FFE) und dem beweglichen und teilweise geöffneten Fahrzeugelement (FE) ausgebildet ist,
wobei bei Ausleuchtung des Erfassungsbereichs (5.1) und Erfassung eines sich in dem ausgeleuchteten Erfassungsbereich (5.1) befindenden oder bewegenden Objekts (O) der Aktuator (4) den Sperrmechanismus (3) vollständig entriegelt und das Schloss (2) öffnet.

9. Fahrzeug (F) nach einem der vorhergehenden Ansprüche 5 bis 8, wobei die Erfassungseinheit (5) zumindest einen elektronischen Sensor, insbesondere einen kapazitiven Sensor, umfasst.

10. Fahrzeug (F) nach einem der vorhergehenden Ansprüche 5 bis 9, wobei die Erfassungseinheit (5) in einem Griffbereich des beweglichen Fahrzeugelements (FE) und/oder an dem festen oder fixierten Fahrzeugelement (FFE) angeordnet ist.

11. Fahrzeug (F) nach einem der vorhergehenden Ansprüche 5 bis 10, wobei die Erfassungseinheit (5) zur Erfassung einer Berührung des Griffbereichs und/oder einer Kontaktfläche (5.2) der Erfassungseinheit (5) durch das Objekt (O) ausgebildet ist.

12. Fahrzeug (F) nach einem der vorhergehenden Ansprüche 5 bis 11, wobei der Aktuator (4) über zumindest einen Bowdenzug (7) mit dem Sperrmechanismus (3) gekoppelt ist.

## Claims

1. Unlocking device (1) for unlocking and opening a lock (2) of a movable vehicle element (FE), in particularly a vehicle door, a vehicle front bonnet and/or vehicle boot lid, wherein the unlocking device (1) at least comprises:
- a locking mechanism (3) for locking the lock (2), wherein the locking mechanism (3) holds the lock (2) in at least a primary locking position (PV) or a partially unlocked preliminary latching position (V),
- a detection unit (5) which has a detection region (5.1) for detecting at least one object (O) approaching the detection region (5.1) or located or moving in the detection region (5.1), and
- a lighting unit (6) having an illumination region (6.1) for illuminating the detection region (5.1) of the detection unit (5),
wherein the lighting unit (6) and/or the detection unit (5) become/becomes or are/is activated at least when the locking mechanism (3) becomes or is adjusted from the primary locking position (PV) to the preliminary latching position (V),
wherein an actuator (4) is provided, which is signal-coupled and/or movement-coupled to the locking mechanism (3) of the lock (2) for fully unlocking the lock (2),
wherein the detection unit (5) is signal-coupled to the actuator (4), wherein upon detection of an object (O) in the detection region (5.1) the actuator (4) automatically fully unlocks the locking mechanism (3) and opens the lock (2).

2. Unlocking device (1) according to Claim 1, wherein the detection unit (5) comprises at least one electronic sensor, in particular a capacitive sensor.

3. Unlocking device (1) according to one of the preceding claims, wherein an operating element (B) is provided, which is signal-coupled and/or movement-coupled to the locking mechanism (3) for partially unlocking the lock (2) in order to adjust the lock (2) to the preliminary latching position (V).

4. Unlocking device (1) according to any of the preceding claims, wherein the detection unit (5) and the lighting unit (6) are signal-coupled to the actuator (4) in such a way that at least the lighting unit (6) is deactivated when the actuator (4) adjusts or has adjusted the locking mechanism (3) to the unlocking position (E).

5. Vehicle (F) having a movable vehicle element (FE) which is mounted on a fixed or secured vehicle element (FFE) movably between a closed position (P1), a partially unlocked and regionally opened intermediate position (P1b) and an opened position (P2), and having an unlocking device (1) according to any of the preceding claims.

6. Vehicle (F) according to Claim 5, wherein the vehicle (F) additionally comprises at least:
- an operating element (B) which is coupled to the locking mechanism (3) for at least partially unlocking the lock (2),
wherein the detection unit (5) and the lighting unit (6) are at least signal-coupled to the actuator (4) in such a way that the detection unit (5) and/or the lighting unit (6) will be or are activated when the actuator (4) adjusts or has adjusted the locking mechanism (3) to a preliminary latching position (V).

7. Vehicle (F) according to Claim 6, wherein the lighting unit (6) is configured to illuminate the detection region (5.1) when the locking mechanism (3) is adjusted to the preliminary latching position (V) and the moving vehicle element (FE) is adjusted to the intermediate position (P1b).

8. Vehicle (F) according to any of the preceding Claims 5 to 7, wherein the detection region (5.1) is formed between the fixed or secured vehicle element (FFE) and the movable and partially opened vehicle element (FE),
wherein the actuator (4) fully unlocks the locking mechanism (3) and opens the lock (2) when the detection region (5.1) is illuminated and the object (O) located or moving in the illuminated detection region (5.1) is detected.

9. Vehicle (F) according to any of the preceding Claims 5 to 8, wherein the detection unit (5) comprises at least one electronic sensor, in particular a capacitive sensor.

10. Vehicle (F) according to any of the preceding Claims 5 to 9, wherein the detection unit (5) is arranged in a handle region of the movable vehicle element (FE) and/or on the fixed or secured vehicle element (FFE).

11. Vehicle (F) according to any of the preceding Claims 5 to 10, wherein the detection unit (5) is designed to detect contact with the handle region and/or a contact area (5.2) of the detection unit (5) by the object (O).

12. Vehicle (F) according to any of the preceding Claims 5 to 11, wherein the actuator (4) is coupled to the locking mechanism (3) by means of at least one Bowden cable (7).

## Revendications

1. Dispositif de déverrouillage (1) destiné à déverrouiller et à ouvrir une serrure (2) d'un élément de véhicule (FE) mobile, notamment d'une portière de véhicule, d'un capot de véhicule et/ou d'un hayon de véhicule, le dispositif de déverrouillage (1) comprenant au moins :
- un mécanisme de blocage (3) destiné à verrouiller la serrure (2), le mécanisme de blocage (3) maintenant la serrure (2) dans au moins une position de verrouillage primaire (PV) ou une position de pré-enclenchement (V) partiellement déverrouillée,
- une unité de détection (5), laquelle possède une zone de détection (5.1), afin de détecter au moins un objet (O) qui s'approche de la zone de détection (5.1) qui se trouve ou se déplace dans la zone de détection (5.1), et
- une unité d'éclairage (6) ayant une zone d'éclairage (6.1) destinée à éclairer la zone de détection (5.1) de l'unité de détection (5),
l'unité d'éclairage (6) et/ou l'unité de détection (5) se faisant activer et/ou étant activée(s) au moins lorsque le mécanisme de blocage (3) se fait placer ou est placé de la position de verrouillage primaire (PV) à la position de pré-enclenchement (V), un actionneur (4) étant présent, lequel est couplé signalétiquement et/ou couplé en mobilité avec le mécanisme de blocage (3) de la serrure (2) en vue de complètement déverrouiller la serrure (2),
l'unité de détection (5) étant couplée signalétiquement avec l'actionneur (4), l'actionneur (4), lors de la détection d'un objet (O) dans la zone de détection (5.1), déverrouillant entièrement automatiquement le mécanisme de blocage (3) et ouvrant la serrure (2).

2. Dispositif de déverrouillage (1) selon la revendication 1, l'unité de détection (5) comportant au moins un capteur électronique, notamment un capteur capacitif.

3. Dispositif de déverrouillage (1) selon l'une des revendications précédentes, un élément d'actionnement (B) étant présent, lequel est couplé signalétiquement avec le mécanisme de blocage (3) en vue de déverrouiller partiellement la serrure (2) et/ou couplé en mobilité pour amener la serrure (2) dans la position de pré-enclenchement (V).

4. Dispositif de déverrouillage (1) selon l'une des revendications précédentes, avec lequel l'unité de détection (5) et l'unité d'éclairage (6) sont couplées signalétiquement avec l'actionneur (4) de telle sorte que lorsque l'actionneur (4) place ou a placé le mécanisme de blocage (3) dans la position de déverrouillage (E), au moins l'unité d'éclairage (6) est désactivée.

5. Véhicule (F), comprenant un élément de véhicule (FE) mobile, lequel est monté au niveau d'un élément de véhicule (FFE) fixe ou calé, mobile entre une position fermée (P1), une position intermédiaire (P1b) partiellement déverrouillée et ouverte dans certaines zones et une position ouverte (P2), et comprenant un dispositif de déverrouillage (1) selon l'une des revendications précédentes.

6. Véhicule (F) selon la revendication 5, le véhicule (F) comportant en plus au moins :
- un élément d'actionnement (B), qui est couplé avec le mécanisme de blocage (3) en vue de déverrouiller partiellement la serrure (2), l'unité de détection (5) et l'unité d'éclairage (6) étant couplée au moins signalétiquement avec l'actionneur (4) de telle sorte que lorsque l'actionneur (4) place ou a placé le mécanisme de blocage (3) dans une position de pré-enclenchement (V), l'unité de détection (5) et/ou l'unité d'éclairage (6) se font activer ou sont activées.

7. Véhicule (F) selon la revendication 6, l'unité d'éclairage (6) étant conçue pour éclairer la zone de détection (5.1) lorsque le mécanisme de blocage (3) est placé dans une position de pré-enclenchement (V) et l'élément de véhicule (FE) mobile est placé dans la position intermédiaire (P1b).

8. Véhicule (F) selon l'une des revendications précédentes 5 à 7, la zone de détection (5.1) étant formées entre l'élément de véhicule (FFE) fixe ou calé et l'élément de véhicule (FE) mobile et partiellement ouvert,
l'actionneur (4) déverrouillant complètement le mécanisme de blocage (3) et ouvrant la serrure (2) lors de l'éclairage de la zone de détection (5.1) et la détection d'un objet (O) qui se trouve ou se déplace dans la zone de détection (5.1) éclairée.

9. Véhicule (F) selon l'une des revendications précédentes 5 à 8, l'unité de détection (5) comportant au moins un capteur électronique, notamment un capteur capacitif.

10. Véhicule (F) selon l'une des revendications précédentes 5 à 9, l'unité de détection (5) étant disposée dans une zone de prise de l'élément de véhicule (FE) mobile et/ou au niveau de l'élément de véhicule (FFE) fixe ou calé.

11. Véhicule (F) selon l'une des revendications précédentes 5 à 10, l'unité de détection (5) étant configurée pour détecter un toucher de la zone de prise et/ou d'une surface de contact (5.2) de l'unité de détection (5) par l'objet (O).

12. Véhicule (F) selon l'une des revendications précédentes 5 à 11, l'actionneur (4) étant couplé au mécanisme de blocage (3) par le biais d'au moins un câble Bowden (7).
